# FASCICULE DE BREVET EUROPEEN

(11) **EP 0 489 268 B1**
(45) Date de publication et mention de la délivrance du brevet: **31.01.1996**
(21) Numéro de dépôt: 91119007.2
(22) Date de dépôt: 07.11.1991
(51) Int. Cl.: B29D 30/32

(54) **Dispositif de retroussage pour tambour de fabrication de pneumatique**
Umstülpvorrichtung für Reifenaufbautrommel
Turn-over device for tyrebuilding drum

(30) Priorité: 06.12.1990 FR 9015403
(43) Date de publication de la demande: 10.06.1992
(73) Titulaire: COMPAGNIE GENERALE DES ETABLISSEMENTS MICHELIN - MICHELIN & CIE, F-63040 Clermont-Ferrand Cédex (FR)
(72) Inventeur: Falvard, René, F-63410 Manzat (FR)
(74) Mandataire: Bauvir, Jacques

(56) Documents cités:
- FR-A- 2 194 561
- US-A- 3 044 533
- US-A- 4 226 656
- US-A- 4 278 484
- US-A- 4 302 274

## Description

La présente invention concerne les tambours de fabrication de pneumatiques. Plus particulièrement, elle se rapporte à un dispositif de retroussage que l'on utilise pour retourner les nappes de carcasses autour de la tringle.

Dans une catégorie bien connue de ces dispositifs, on utilise une vessie gonflable ayant l'allure générale d'un tore. Pour assurer le déplacement transversal de ces vessies, déplacement nécessaire pour effectuer l'opération de retroussage, il faut recourir à un élément auxiliaire qui effectue une poussée transversale sur la vessie de retroussage. Cet élément auxiliaire est soit une seconde vessie gonflable ou bien une virole métallique entrant en contact avec la vessie de retroussage. Un exemple d'un tel dispositif est donné dans le brevet US 3 698 987 ou US 4 302 274 ou US 4 302 274.

On connaît également une vessie de retroussage qui développe par elle-même, sous le seul effet de l'élévation de la pression de gonflage, le mouvement de roulement dans le sens transversal nécessaire pour effectuer le retroussage de la nappe de carcasse. Cette vessie de retroussage est décrite dans le brevet US 4 087 306.

L'inconvénient de tous les dispositifs connus résulte de leur encombrement en diamètre, en général fort important, au point d'entrer en collision avec les couloirs de pose des nappes de carcasse et autres produits amenés sur le tambour du pneumatique. Cet encombrement en diamètre est particulièrement gênant lorsque le tambour se déplace de poste en poste dans une chaîne de fabrication des pneumatiques.

Les dispositifs dans lesquels le mouvement de roulement dans le sens transversal résulte du déplacement d'une virole métallique disposée radialement à l'extérieur de la vessie sont incompatibles avec des retournements de grande longueur de nappes de carcasse. Tous les autres dipositifs à vessie connus, dans lesquels la poussée est provoquée par une autre vessie, ou par l'appui d'un mécanisme disposé latéralement, provoquent au cours de leur fonctionnement une mise en éventail de la nappe de carcasse à rabattre. En effet, au départ, la nappe de carcasse présente une configuration cylindrique sur la totalité de sa largeur, notamment entre la tringle et le bord latéral de la nappe. Sous l'effet de l'augmentation de pression dans la vessie de retroussage, le bord de la nappe de carcasse à retourner, c'est-à-dire la partie comprise entre la tringle et l'extrémité latérale, se relève progressivement pour passer par un stade où cette partie de nappe de carcasse se dispose suivant un plan perpendiculaire à l'axe de rotation. Par la suite, au fur et à mesure du mouvement de roulement dû à la poussée de la vessie de retroussage, la nappe de carcasse reprend finalement une forme cylindrique. On remarque que, au cours de ce mouvement, le bord de la nappe de carcasse subit une élongation très importante dans le sens circonférentiel, élongation d'autant plus importante que la longueur transversale de nappe de carcasse à rabattre est grande. Il en résulte un étirage du calandrage en caoutchouc préjudiciable à la qualité du pneumatique.

La vessie de retroussage selon l'enseignement du brevet US 4 087 306 présente en outre un inconvénient supplémentaire. Cet inconvénient résulte du fait que le mouvement de retroussage dû au déplacement de la vessie dans le sens transversal débute à une pression de gonflage de la vessie très faible. Lorsque la pression de gonflage est faible, l'effort que cette vessie est capable de développer sur la nappe de carcasse reste très faible. Dans le cas des nappes de carcasses métalliques, il est insuffisant pour assurer un retroussage régulier au pied de la tringle. Lorsque le retroussage est effectué, on constate que la nappe de carcasse n'est pas toujours fidèlement appliquée contre les produits sur lesquels elle est retournée, notamment aux alentours de la tringle où il peut subsister un espace vide.

Toutes les vessies de retroussage connues ne peuvent être utilisées que pour retourner des longueurs de nappes de carcasse relativement réduites. Or de plus en plus souvent, il est important de pouvoir faire des retournements de grande longueur, parfois jusqu'à 7 ou 8 cm ou même plus.

Le préambule de la revendication 1 repose sur le document US-A-3044533 qui décrit l'utilisation de fils de renforcement dans une vessie de retroussage.

Le but de la présente invention est de proposer un dispositif de retroussage dont le principe ne souffre d'aucune limite quant à la longueur de la nappe à retourner. Un autre but de l'invention est de proposer un dispositif de retroussage qui puisse fonctionner à un encombrement en diamètre aussi faible que possible, même pour les grandes longueurs de nappes à retourner. Un but supplémentaire de l'invention est de pouvoir retourner des nappes de carcasse présentant une raideur importante tout en assurant un collage rigoureux et constant des nappes de carcasse sur les constituants du pneumatique autour desquels elle est retournée, à savoir la tringle et le bourrage tringle.

Le dispositif de retroussage selon l'invention, utilisable avec un tambour de fabrication d'un pneumatique, comporte une vessie annulaire gonflable de retroussage, ayant un bord d'attaque à orienter du côté du tambour, et des moyens exerçant une poussée sur la vessie de retroussage. Il est caractérisé en ce que la paroi de la vessie comporte des moyens limitant l'expansion radiale de la vessie à une valeur maximale, quelle que soit la pression de gonflage de celle-ci, et en ce que les moyens exerçant la poussée sont disposés radialement sous la vessie ; ces moyens exerçant la poussée s'étendent transversalement depuis un niveau en retrait par rapport au bord d'attaque jusqu'à l'extrémité de la vessie opposée à son bord d'attaque, et ladite poussée s'exerce radialement du bas vers le haut pour provoquer, lorsque la vessie a été gonflée, l'avance de celle-ci vers le centre du tambour. Il est également caractérisé en ce que les moyens limitant l'expansion radiale sont constitués par des fils de renforcement orientés à zéro degré, s'opposant à toute élongation supplémentaire lorsqu'un développement correspondant à la valeur maximale est atteint, disposés dans la totalité de la paroi de la vessie de retroussage.

Dans l'exemple de réalisation illustrant l'invention, les moyens de poussée sur la vessie de retroussage sont constitués par une seconde vessie, dite de poussée, agissant radialement sur la vessie de retroussage. Mais un système mécanique à expansion radiale situé au même endroit permettrait d'obtenir le même résultat.

L'invention va être mieux comprise en consultant la suite de la description en liaison avec les figures jointes dans lesquelles :
- la figure 1 est une coupe radiale montrant la constitution d'un dispositif de retroussage selon l'invention,
- la figure 2 montre plus particulièrement la constitution de la vessie de retroussage,
- les figures 3 à 9 montrent le fonctionnement du dispositif de retroussage selon l'invention, en illustrant différentes phases du fonctionnement.

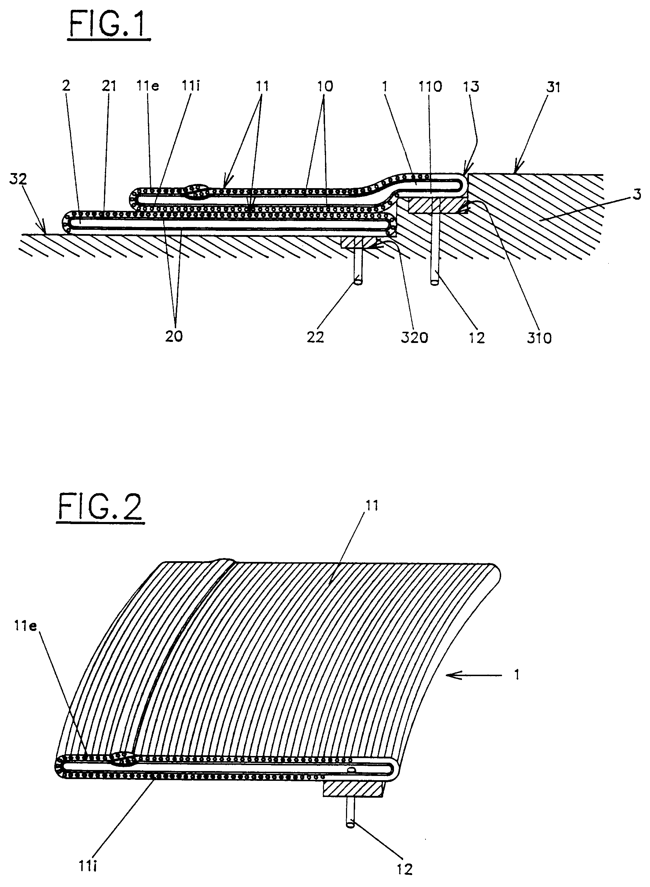

Les vessies apparaissant aux figures 1 et 2 sont toutes deux composées de deux nappes de renforcement prises en sandwich entre deux couches de caoutchouc. Les deux vessies, à savoir aussi bien la vessie de retroussage 1 que la vessie de poussée 2, sont toutes deux préparées à plat sur un support cylindrique de diamètre approprié.

Les vessies 1 et 2 sont renforcées toutes deux par une nappe 10, 20 de fils inextensibles, placés à 90°. Les angles sont conventionnellement mesurés comme pour les pneumatiques, à savoir par rapport à un plan perpendiculaire à l'axe de rotation du tambour de fabrication, donc du dispositif. La paroi radialement extérieure 21 de la vessie de poussée 2 ainsi que toute la paroi 11 de la vessie de retroussage 1 sont renforcées par des fils à O° autorisant une certaine extension de la paroi considérée, et assurant un blocage de la forme prise par la vessie lorsqu'un développement circonférentiel choisi est atteint. En ce qui concerne la vessie de retroussage 1, seule une petite partie 110 de la paroi 11 correspondant à la zone de fixation sur le bâti 3 du tambour n'a pas à être renforcée par des fils à 0°.

A cette fin, différents types de renforcement peuvent être utilisés. On peut, comme dans l'exemple illustrant l'invention, utiliser des fils à âme cassante. Il s'agit d'un type de câbles comportant une âme intérieure dont le rôle est d'assurer seulement un support autour duquel est enroulé en hélice un certain nombre de brins assurant la fonction de résistance à l'allongement, le tout imprégné de caoutchouc. Lorsque ce type de câble est sollicité en traction, l'âme, constituée d'un matériau ayant de faibles caractéristiques à la rupture, est rompu sous l'effet de la traction, et le fil s'allonge d'une valeur fonction de l'angle de l'hélice des brins enroulés autour de l'âme, et fonction également du diamètre de l'âme. Cette rupture de l'âme intervient lors du premier gonflage de la vessie. Lorsque la sollicitation cesse, ce type de fil revient toujours à sa longueur initiale sous l'effet du rappel assuré par le caoutchouc environnant.

Il est également possible d'utiliser des fils ondulés, ayant à l'état libre de toute contrainte, l'allure d'une sinusoïde, telle qu'on les utilise pour réaliser des nappes de protection du sommet des pneumatiques. Là encore, lorsque de tels fils sont sollicités dans le sens de leur longueur, dans un premier temps, ils ne s'opposent quasi pas à l'allongement, tant que les ondulations n'ont pas disparu. Lorsque l'allongement du câble a provoqué la disparition des ondulations, alors apparaît un effet de blocage et l'allongement ultérieur du câble est faible ou nul, quelle que soit l'augmentation de l'effort de sollicitation.

Un troisème type de fil utilisable pour réaliser cette invention est le fil élastique hybride constitué de deux matériaux différents ayant des caractéristiques d'allongement très différentes et bobiné autour d'une âme de façon à intervenir en séquence en fonction de l'allongement du câble. Le brevet FR 2 283 968 donne un exemple de réalisation d'un tel fil hybride. Là encore, en fonction de la constitution du fil, il est possible d'obtenir un taux d'allongement initial choisi avant d'atteindre un blocage de la longueur du fil.

La paroi radialement extérieure 21 de la vessie de poussée 2 est renforcée par des fils à âme cassante autorisant un allongement de 15 % environ. Quant à la vessie de retroussage 1, en fonction de son déplacement transversal, un point situé dans la paroi intérieure 11i dans la conformation initiale (figures 1, 3 et 4) est suceptible de passer dans la paroi extérieure 11e, et vice versa. C'est pourquoi la vessie de retroussage 1 est renforcée en presque totalité par les mêmes fils à âme cassante autorisant un allongement à la rupture de l'ordre de 21 %. Il va de soi que les valeurs données ne constituent qu'un exemple de réalisation donnant d'excellents résultats, mais peuvent bien entendu être adaptées en fonction de l'espace disponible et en fonction des dimensions et des caractéristiques des nappes de carcasse à retourner.

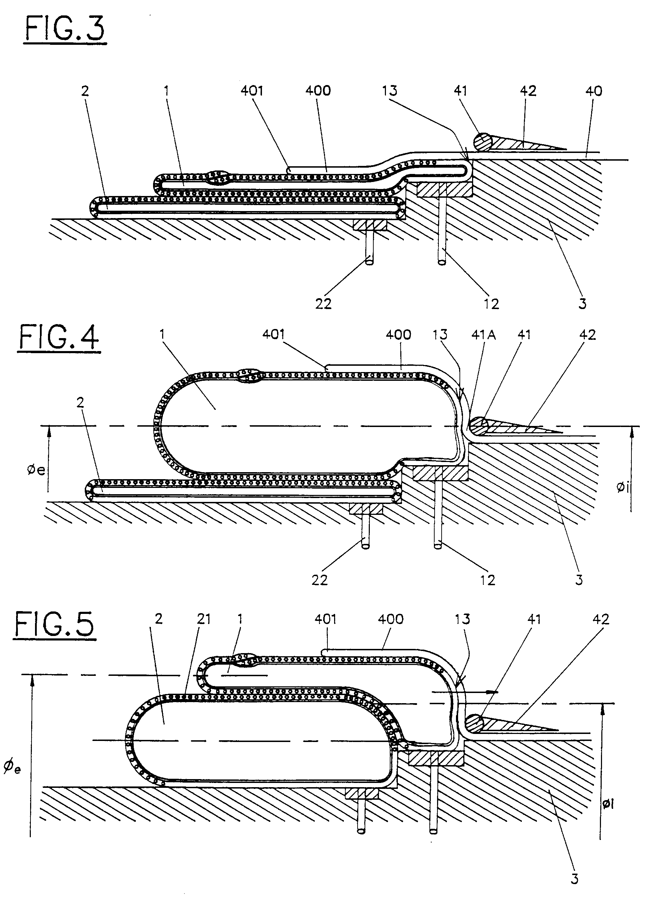

L'implantation des différentes vessies sur un tambour de fabrication de pneumatique apparaît bien aux figures 3 et suivantes. On aperçoit le bâti 3 du tambour de fabrication du pneumatique constituant le support sur lequel les différentes vessies sont implantées. La zone médiane 31 du tambour de fabrication constitue un support cylindrique sur lequel le pneumatique va être progressivement fabriqué. Aux extrémités latérales de celles-ci, des gorges 310 sont aménagées pour recevoir et fixer la vessie de retroussage 1. La tubulure 12 permet l'alimentation en air de gonflage de celle-ci. A un niveau radial légèrement inférieur, la portée 32 permet d'implanter la vessie de poussée 2 dans un gorge 320 aménagée à cet effet. La tubulure 22 permet l'alimentation en air comprimé de la vessie de poussée 2. En variante, les deux vessies 1 et 2 peuvent constituer un seul bloc soudé par la vulcanisation à une zone commune d'accrochage que l'on fixe sur le tambour.

La zone médiane 31 et la vessie de retroussage 1 constituent ensemble une surface sensiblement cylindrique sur laquelle on dépose tout d'abord une nappe de carcasse 40. Ensuite, la tringle 41 ainsi qu'un bourrage tringle 42, sont implantés à l'endroit voulu. Toutes ces opérations apparaissent bien à la figure 3.

A la figure 4 débute l'intervention du dispositif de retroussage. Dans un premier temps, la vessie de retroussage 1 est gonflée à sa pression nominale de fonctionnement qui peut être relativement élevée, autant que nécessaire pour assurer un contact intime entre le bord 400 de la nappe de carcasse 40 qu'il faut retourner autour de la tringle, et ladite tringle. Il est très important que la nappe de carcasse 40 soit très correctement appliquée et collée sur la tringle 41 au niveau de la zone identifiée par la référence 41A sur la figure 4. Dans le cas de nappes de carcasses métalliques très raides, il peut être nécessaire de pouvoir gonfler la vessie de retroussage 1 à une pression fort élevée, et ceci avant que cette vessie ne commence à effectuer le moindre déplacement transversal. Tant que le diamètre d'équateur ⌀ᵢ du côté du bord d'attaque 13 de la vessie de retroussage 1 est sensiblement égal au diamètre d'équateur ⌀ₑ du côté opposé de la vessie de retroussage (fig. 4), celle-ci ne développe aucune poussée dans le sens transversal. Le retroussage n'a donc pas commencé et ceci est une caractéristique importante de l'invention. Pour assurer le déplacement dans le sens transversal de la vessie de retroussage, il est nécesaire de comprimer celle-ci par le bas et du côté opposé au bord d'attaque, pour que le diamètre d'équateur ⌀ₑ de ce côté soit supérieur au diamètre d'équateur ⌀ᵢ du côté du bord d'attaque. Dans l'exemple de réalisation décrit, on utilise pour cela la vessie de poussée 2.

La deuxième opération consiste donc à augmenter la pression interne de la vessie de poussée 2. Il est souhaitable que la paroi radialement extérieure 21 de celle-ci garde une configuration sensiblement cylindrique. C'est pourquoi on a renforcé cette paroi également par des fils à âmes cassantes qui permettent de maîtriser la forme de cette paroi 21. Sous l'effet de l'élévation de la pression de gonglage de la vessie de poussée, la vessie de retroussage 1 prend la forme apparaissant à la figure 5 et son déplacement transversal vers le tambour de fabrication du pneumatique débute en réalité dès que le diamètre ⌀ₑ est plus grand que le diamètre ⌀ᵢ.

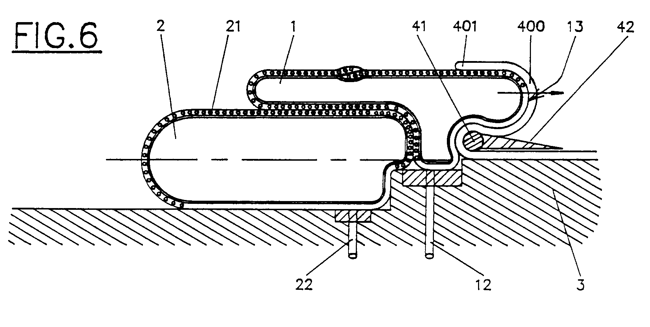

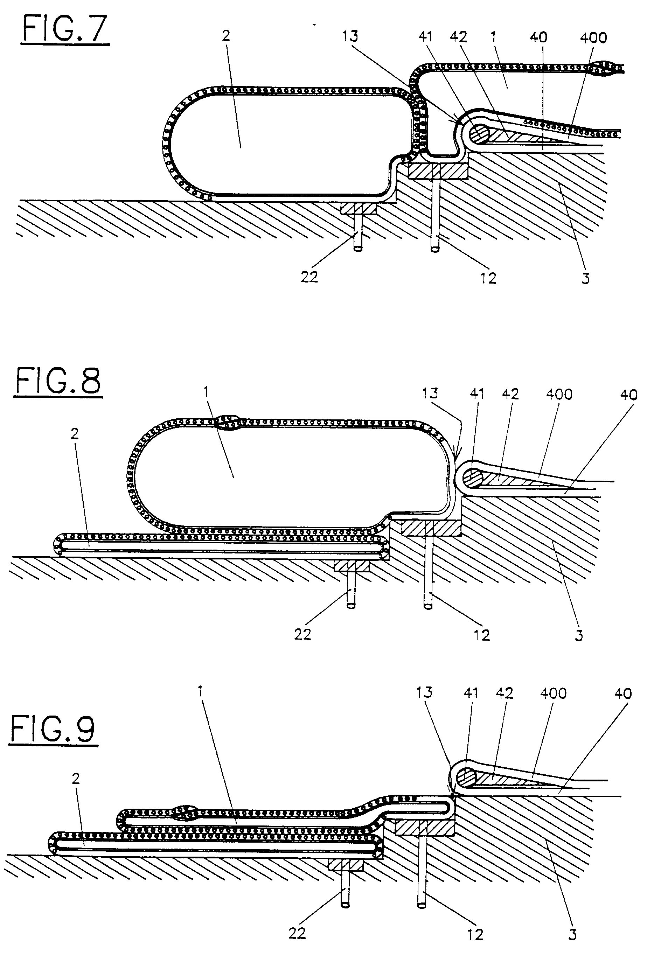

Au cours de ce déplacement transversal, la nappe de carcasse a l'allure d'un S (voir figure 6) qui se déforme progressivement, sans que le bord 401 de la partie 400 à retrousser ne s'élève jamais à un diamètre élevé. La vessie de retroussage 1 chemine vers le centre du tambour à la manière d'une chenille. Grâce à cela, la nappe de carcasse est rabattue par un véritable retroussage (figure 7).

Le mouvement inverse s'obtient en dégonflant tout d'abord la vessie de poussée 2 (figure 8). Sous l'effet des variations de diamètre d'équateur, la vessie de retroussage 1 recule progressivement à sa position initiale, même si le rabattement s'est effectué sur une pente orientée vers le milieu du tambour, comme c'est le cas dans l'exemple illustant l'invention, où la zone médiane se situe à un diamètre plus faible que le diamètre radialement extérieur des tringles. Ensuite on dégonfle la vessie de retroussage pour ramener le dispositif dans les conditions initiales (figure 9).

Diffèrentes adaptations peuvent facilement être envisagées sans échapper à la portée de la présente invention. Par exemple, si l'on ne dispose que d'une seule commande pneumatique réservée sur le tambour au fonctionnement du dispositif de retroussage, on peut très facilement incorporer dans le tambour lui-même un dispositif à retard pour que la vessie de poussée 2 se gonfle toujours après la vessie de retroussage 1, et pour que la vessie de poussée 2 se dégonfle toujours avant la vessie de retroussage 1.

Ou encore, on peut adapter un tel dispositif de retroussage à d'autres stades de la fabrication des pneumatiques, par exemple pour le gainage des tringles, ou encore pour replier des nappes de sommet sur elles-mêmes ou sur d'autres nappes de sommet, problème bien connu des spécialistes de la technique. Ainsi, le terme tambour doit être compris dans une acceptation très large, comme englobant tout support permettant de recevoir un constituant autour duquel on va retourner quelque chose : une gomme d'enrobage, une nappe armée de fils ou non. Les moyens essentiels de l'invention sont l'utilisation, comme expliqué, d'une vessie de retroussage bridée en diamètre maximum, sur laquelle agit un moyen de poussée pour modifier à la demande la valeur des diamètres d'équateur ⌀ᵢ et ⌀ₑ.

## Revendications

1. Dispositif de retroussage pour tambour (3) de fabrication de pneumatique, le dispositif comportant une vessie annulaire gonflable de retroussage (1), ayant un bord d'attaque (13) à orienter côté tambour, et des moyens exerçant une poussée sur la vessie de retroussage, les moyens exerçant la poussée étant disposés radialement sous la vessie (1), s'étendant transversalement depuis un niveau en retrait par rapport au bord d'attaque (13) jusqu'à l'extrémité de la vessie opposée à son bord d'attaque, et
ladite poussée s'exerçant radialement du bas vers le haut pour provoquer, lorsque la vessie de retroussage (1) a été gonflée, l'avance de celle-ci vers le centre (31) du tambour (3),
caractérisé en ce que
- la paroi (11) de la vessie de retroussage (1) comporte des fils de renforcement orientés à zéro degré, disposés dans la totalité de la paroi (11) de la vessie de retroussage (1) excepté une petite partie comportant le bord d'attaque (13), limitant l'expansion radiale de la vessie (1) à une valeur maximale, quelle que soit la pression de gonflage de celle-ci, en s'opposant à toute élongation supplémentaire lorsqu'un développement correspondant à la valeur maximale est atteint.

2. Dispositif selon la revendication 1, caractérisé en ce que les fils de renforcement sont choisis dans le groupe constitué par les fils ondulés, les fils à âme cassante, ou les fils hybrides.

3. Dispositif selon l'une des revendications 1 à 2, caractérisé en ce que lesdits moyens exerçant une poussée sont constitués par une seconde vessie (2) gonflable.

4. Dispositif selon la revendication 3, caractérisé en ce que la seconde vessie (2) est renforcée par des fils à zéro degré s'opposant à toute élongation supplémentaire lorsqu'un développement maximal choisi est atteint, disposés dans la paroi radialement extérieure (21) de la seconde vessie (2).

5. Dispositif selon la revendication 4, caractérisé en ce que les fils de renforcement sont choisis dans le groupe constitué par les fils ondulés, les fils à âme cassante, ou les fils hybrides.

6. Dispositif selon l'une des revendication 1 à 5, caractérisé en ce que le développement circonférentiel maximal de la vessie (1) de retroussage est constant pour toute la paroi extérieure (11e) de celle-ci, de sorte que celle-ci garde, vue en section radiale, une configuration sensiblement cylindrique.

7. Dispositif selon l'une des revendications 1 à 6, caractérisé en ce que le diamètre d'équateur ⌀ₑ du côté opposé au bord d'attaque de la vessie de retroussage 21 est, pendant le retroussage, supérieur au diamètre d'équateur ⌀ᵢ du côté du bord d'attaque de la vessie de retroussage 1.

8. Dispositif selon l'une des revendications 1 à 3, caractérisé en ce que lesdits moyens exerçant une poussée sont tels que, pendant leur action, ils présentent une paroi radialement extérieure sensiblement cylindrique.

## Claims

1. A turn-up device for a tyre building drum (3), the device comprising an inflatable annular turn-up bladder (1) having a leading edge (13) to be oriented on the drum side, and means exerting a thrust on the turn-up bladder, the means exerting the thrust being arranged radially below the bladder (1), extending transversely from a level set back with respect to the leading edge (13) to the end of the bladder opposite its leading edge, and said thrust being exerted radially from the bottom towards the top in order, when the turn-up bladder (1) has been inflated, to cause the advance thereof towards the centre (31) of the drum (3), characterised in that the wall (11) of the turn-up bladder (1) has reinforcement cords oriented at zero degrees, arranged in the entire wall (11) of the turn-up bladder (1) except for a small portion comprising the leading edge (13), limiting the radial expansion of the bladder (1) to a maximum value, whatever the inflation pressure thereof, by opposing any additional elongation when a development corresponding to the maximum value is reached.

2. A device according to Claim 1, characterised in that the reinforcement cords are selected from the group consisting of undulated cords, brittle-core cords or hybrid cords.

3. A device according to one of Claims 1 to 2, characterised in that said thrust-exerting means are formed by a second inflatable bladder (2).

4. A device according to Claim 3, characterised in that the second bladder (2) is reinforced by cords of 0° which oppose any additional elongation when a selected maximum development has been reached, being arranged in the radially outer wall (21) of the second bladder (2).

5. A device according to Claim 4, characterised in that the reinforcement cords are selected from the group consisting of undulated cords, brittle-core cords or hybrid cords.

6. A device according to one of Claims 1 to 5, characterised in that the maximum circumferential development of the turn-up bladder (1) is constant for the entire outer wall (11e) thereof, such that the latter, when viewed in radial section, retains a substantially cylindrical configuration.

7. A device according to one of Claims 1 to 6, characterised in that the equator diameter ⌀ₑ on the side opposite the leading edge of the turn-up bladder 21, during turning-up, is greater than the equator diameter ⌀ᵢ of the leading-edge side of the turn-up bladder 1.

8. A device according to one of Claims 1 to 3, characterised in that said thrust-exerting means are such that, during the action thereof, they have a substantially cylindrical radially outer wall.

## Patentansprüche

1. Umstülpvorrichtung für Reifenaufbautrommel (3), wobei die Vorrichtung eine ringförmige, aufpumpbare Umstülpblase (1) aufweist, die einen Angriffsrand (13) zur Ausrichtung zur Trommel hin aufweist, sowie Mittel, die eine Schubwirkung auf die Umstülpblase ausüben, wobei die Mittel, die die Schubwirkung ausüben, radial unter der Blase (1) angeordnet sind, sich in Querrichtung von einer bezüglich dem Angriffsrand (13) zurückgesetzten Höhe bis zum entgegengesetzten Ende ihres Angriffsrandes erstrecken, und die genannte Schubwirkung radial von unten nach oben einwirkt, um, wenn die Umstülpblase (1) aufgepumpt ist, deren Vorwärtsbewegung zur Mitte (31) der Trommel (3) hin hervorzurufen,
dadurch **gekennzeichnet**, daß
- die Wand (11) der Umstülpblase (1) Verstärkungsdrähte aufweist, die unter 0° ausgerichtet sind, die in der gesamten Wand (11) der Umstülpblase (1) angeordnet sind, ausgenommen einen kleinen Abschnitt, der den Angriffsrand (13) aufweist, und die die radiale Aufweitung der Blase (1) auf einen Maximalwert begrenzen, gleichgültig, wie hoch deren Aufpumpdruck auch sein mag, indem sie sich jeglicher zusätzlicher Dehnung widersetzen, wenn eine Entfaltung, die dem Maximalwert entspricht, erreicht ist.

2. Vorrichtung nach Anspruch 1, dadurch **gekennzeichnet**, daß die Verstärkungsdrähte in der Gruppe ausgewählt sind, die von gewellten Drähten, Drähten mit spröder Seele oder Hybriddrähten gebildet sind.

3. Vorrichtung nach einem der Ansprüche 1 bis 2, dadurch **gekennzeichnet**, daß die genannten Mittel, die eine Schubwirkung ausbilden, von einer zweiten aufpumpbaren Blase (2) gebildet sind.

4. Vorrichtung nach Anspruch 3, dadurch **gekennzeichnet**, daß die zweite Blase (2) durch Drähte unter 0° verstärkt ist, die sich jeder zusätzlichen Dehnung widersetzen, wenn eine gewählte, maximale Entfaltung erreicht ist, und die in der radial außenliegenden Wand (21) der zweiten Blase (2) vorgesehen sind.

5. Vorrichtung nach Anspruch 4, dadurch **gekennzeichnet**, daß die Verstärkungsdrähte in der Gruppe ausgewählt sind, die von gewellten Drähten, Drähten mit spröder Seele oder Hybriddrähten gebildet ist.

6. Vorrichtung nach einem der Ansprüche 1 bis 5, dadurch **gekennzeichnet**, daß die maximale Umfangsentfaltung der Umstülpblase (1) für deren gesamte Augenwand (11e) derart konstant ist, daß sie, im Radialschnitt gesehen, eine im wesentlichen zylindrische Ausbildung beibehält.

7. Vorrichtung nach einem der Ansprüche 1 bis 6, dadurch **gekennzeichnet**, daß der Teilkreisdurchmesser ⌀ₑ der Seite, die dem Angriffsrand der Umstülpblase 21 entgegengesetzt ist, während der Umstülpung größer ist als der Teilkreisdurchmesser ⌀ᵢ auf der Seite des Angriffsrandes der Umstülpblase 1.

8. Vorrichtung nach einem der Ansprüche 1 bis 3, dadurch **gekennzeichnet**, daß die genannten Mittel, die eine Schubwirkung ausüben, derart sind, daß sie während ihrer Wirkung eine radial außenliegende, im wesentlichen zylindrische Wand darbieten.
